Europäisches Patentamt

European Patent Office

Office européen des brevets

(19)

(11) Veröffentlichungsnummer: **0 075 279**
**B1**

(12) **EUROPÄISCHE PATENTSCHRIFT**

(45) Veröffentlichungstag der Patentschrift:
22.08.84

(21) Anmeldenummer: 82108542.0

(22) Anmeldetag: 16.09.82

(51) Int. Cl.³: **C 04 B 35/00,** C 04 B 35/52,
C 25 C 3/08

(54) Bindemittel für feuerfeste Materialien und dessen Verwendung.

(30) Priorität: 17.09.81 NO 813164

(43) Veröffentlichungstag der Anmeldung:
30.03.83 Patentblatt 83/13

(45) Bekanntmachung des Hinweises auf die Patenterteilung:
22.08.84 Patentblatt 84/34

(84) Benannte Vertragsstaaten:
CH DE FR IT LI NL

(56) Entgegenhaltungen:
GB - A - 901 847
US - A - 3 932 244
US - A - 4 032 653

(73) Patentinhaber: Ardal og Sunndal Verk a.s.,
Sörkedalsveien 6, Oslo 3 (NO)

(72) Erfinder: Sorensen, Ivar Stig, N-5875 Ardalstangen (NO)

(74) Vertreter: Patentanwälte Zellentin,
Zweibrückenstrasse 15, D-8000 München 2 (DE)

## Beschreibung

Die vorliegende Erfindung betrifft ein Bindemittel auf Kohlenwasserstoffbasis zum Binden feuerfester Materialien in Form von Formkörpern oder von Pulver bei niedrigen Temperaturen (10 bis 30° C), bei dem die bindende Phase nach dem Abbinden sowie einer Hochtemperaturhärtung eine niedrige Durchlässigkeit und eine hohe Druckfestigkeit aufweist.

Mit der Bezeichnung Bindemittel oder bindendes System oder einfach Binder wird eine Substanz bzw. eine Mischung von Substanzen bezeichnet, die mit festen Teilchen bzw. Teilen gemischt werden kann und anschliessend gehärtet werden kann, wodurch aus der Mischung mit den festen Teilchen bzw. aus den verbundenen Formkörpern ein monolithisches Ganzes wird. Feuerfeste bzw. hitzefeste Bindemittel zur Verwendung in reduzierenden Atmosphären müssen die folgenden Anforderungen erfüllen:

1. Sie müssen einen hohen Schmelzpunkt aufweisen.

2. Sie müssen inert gegenüber einem chemischen Angriff sein.

3. Sie müssen eine niedrige Durchlässigkeit bzw. eine hohe Koksausbeute aufweisen.

4. Die Druckfestigkeit/Zugfestigkeit bei niedrigen und hohen Temperaturen muss hoch sein.

5. Die Temparaturwechselbeständigkeit muss hoch sein.

6. Sie dürfen nicht umweltschädigend sein.

7. Sie müssen preiswert sein.

Für die Verwendung in inerten/reduzierenden Atmosphären bei hohen Temperaturen wurden eine Vielzahl von unterschiedlichen Bindemitteln eingeführt und werden gegenwärtig auch benutzt. Beispielsweise ist es als Bindemittel für Kohlenstoff üblich, Produkte auf Teer- bzw. Pechbasis zu verwenden. Die Viskosität eines derartigen Bindemittels kann ausreichend erniedrigt werden, um ihre Verwendung bzw. eine Formgebung bei Raumtemperatur zu ermöglichen, indem spezielle Teerfraktionen ausgewählt werden oder man ein viskositätserniedrigendes Mittel zusetzt.

So beschreibt die US-A Nr. 4032653 die Verwendung von aromatischen Kohlenwasserstoffen, Methylnaphthalinen, zur Verminderung der Viskosität eines Niedertemperatur-Pechs. Die Menge an Methylnaphthalinen wird mit 8 bis 16% der Menge des Bindemittels angegeben. Methylnaphthaline sind jedoch in vieler Beziehung nachteilig, da sie eine niedrige Koksausbeute aufweisen und gleichzeitig einen starken durchdringenden Geruch und einen beträchtlichen Dampfdruck bei einer Temperatur von bereits 25° C besitzen.

Wenn ein derartiges viskositätsvermindertes Mittel in Mengen verwendet wird, die der Obergrenze des angegebenen Bereichs entsprechen, steigt die Verdampfung, während gleichzeitig des Koksrückstand in dem Bindemittel vermindert wird, da die Koksausbeute der Methylnaphthaline niedrig ist. Wenn andererseits die Menge eines derartigen viskositätserniedrigenden Mittels auf die Untergrenze des angegebenen Bereichs vermindert wird, wird die Viskosität so hoch, dass eine gute Kompression bzw. ein gutes Stampfen der Masse schwierig wird. Die Durchlässigkeit der fertigen gestampften Masse wird dadurch leicht zu hoch.

Die norwegische Patentanmeldung Nr. 791299 beschreibt ein Bindemittel, das eine Mischung von Melassen ist (maximal 15% mit maximal 5% Wasser) und das bis zu 15% eines Hochtemperatur-Erweichungsmittels enthält.

Der erforderliche Anteil des Bindemittels in der fertigen Masse wird mit 20 bis 30% angegeben, und teilweise als Melassen, teilweise als Hochtemperatur-Pech (6 bis 15%).

Grosse Bindemittelmengen machen es jedoch erforderlich, dass ein verwendeter Binder eine hohe Koksausbeute aufweist. Diese Forderung wird von dem Hochtemperatur-Pech erfüllt, jedoch nicht von den Melassen, die eine Koksausbeute von etwa 30% aufweisen.

Ein weiterer Nachteil des beschriebenden bindenden Systems liegt darin, dass die Menge an flüssigem Bindemittel (Melassen) zu niedrig sein kann, was dazu führt, dass die Masse leicht zu trocken wird. Ein grosses Gesamtvolumen des Bindemittels, zu dem nur geringe Mengen eines flussigen Bindemittels mit niedriger Koksausbeute zugesetzt sind, führt leicht dazu, dass die fertige Masse eine hohe Durchlässigkeit aufweist.

Es wurden ferner verschiedene Versuche durchgeführt, Teer als Bindemittel zur Erzeugung von Formkörpern bei Raumtemperatur zu verwenden. Ungeachtet des Fehlens einer zuverlässigen Korrelation zwischen der Viskosität und der Koksausbeute kann die folgende Aufstellung dazu dienen, die Lage zu erläutern:

| Viskosität, mPa·s 20° C | | maximale Koksausbeute, % |
|---|---|---|
| Teer 1 | 80 000-100 000 | 40-45 |
| Teer 2 | 5000-    8000 | 30-45 |
| Teer 3 |         2000 | 27 |

Parameter wie das C/H-Verhältnis, der Grad der Vernetzung zwischen den Molekülen und das Verhältnis von kettenförmigen Verbindungen zu ringförmigen Verbindungen hat dabei einen grossen Einfluss auf die Koksausbeute.

Es ist daher möglich, dass ein spezieller Teer beispielsweise eine Viskosität von 200 000 mPa·s und dabei eine Koksausbeute von nur 20% aufweist.

Die traditionellen Stampfmassen, die als verbindende Mittel für Kohlenstoffkörper verwendet werden, die die Auskleidungen von elektrothermischen und elektrochemischen Öfen bilden, enthalten üblicherweise Bindemittel mit einem Erweichungspunkt von 50 bis 120° C und einer Koksausbeute von 52 bis zu etwa 60%. Im Hinblick auf die Qualitätsanforderungen sind derartige Produkte üblicherweise annehmbar.

Andererseits ist jedoch das Aufbringen der heissen Stampfmassen im Hinblick auf die damit beschäftigten Arbeiter sowie auch für die Umwelt in mehrfacher Hinsicht nachteilig. Einer der oben erwähnten Teerbinder mit einer Viskosität von 500 bis 800 mPa·s wäre vom Standpunkt des einen solchen Binder aufbringenden Arbeiters und vom Umweltschutz her vorteilhaft, liefert jedoch keine befriedigenden Ergebnisse in qualitativer Hinsicht, jedenfalls dann nicht, wenn das fertige Produkt eine niedrige Durchlässigkeit aufweisen muss.

Die schwedische Offenlegungsschrift Nr. 411224 beschreibt die Herstellung eines Bindemittels für feuerfeste Materialien auf der Basis von Teer und Teeröl.

Das dort beschriebene Verfahren betrifft eine Mischung eines Pechs, das nach der Hitzebehandlung einen Gehalt an toluolunlöslichen Bestandteilen von wenigstens 20 bis 26% sowie einen Erweichungspunkt von 100 bis 110°C aufweist, wenn man eine gegebene Teerölfraktion verwendet, deren Siedepunktsbereich im wesentlichen zwischen 250 bis 300°C liegt.

Das Verhältnis zwischen dem Pech und dem Teeröl variiert zwischen 55/45 und 65/35. Die Viskosität wird als zwischen 5000 und 10 000 mPa·s (50 bis 100 Po) liegend angegeben.

Der angegebene Binder ist im Hinblick auf die Umwelterfordernisse und wirtschaftlichen Erfordernisse befriedigend und weist gleichzeitig eine ausreichende Viskosität für die Formgebung bei Raumtemperatur (20°C) auf.

Mit dem angegebenen Rohmaterialien und der daraus sich ergebenden Viskosität ist jedoch die Koksausbeute eines Binders der angegebenen Art zu niedrig (weniger als 25%), wenn er für Anwendungen verwendet werden soll, für die eine niedrige Durchlässigkeit und eine hohe Druckfestigkeit unbedingt erforderlich ist. Ferner erhärtet ein Binder dieses Typs nicht, bevor es zu seiner Verkokung bei 400 bis 500°C kommt. Wenn eine Formstabilität in einem Temperaturbereich von 20 bis 500°C erforderlich ist, ist ein solcher Binder nicht geeignet, diese Anforderung zu erfüllen.

Es sind auch synthetische Bindemittel mit einer hohen Koksausbeute (50 bis 60%) seit einer Reihe von Jahren bekannt, wobei diese primär Phenolformaldehyd- und Furanderivate sind. Aufgrund verschiedener Umstände ist die Verwendung derartiger Bindemittel jedoch begrenzt. So werden Formaldehyd, Furfural und Furfurylalkohol aus gesundheitlichen Gründen nur in niedrigen Konzentrationen in einer Betriebsatmosphäre zugelassen. Gemäss der schwedischen Umweltgesetzgebung vom 1. Januar 1979 sind die folgenden Werte vorgeschrieben:

| | | |
|---|---|---|
| Phenol | 1 ppm bzw. | 4 mg/m³ |
| Formaldehyd | 1 ppm bzw. | 1,3 mg/m³ |
| Furfural | 5 ppm bzw. | 20 mg/m³ |
| Furfurylalkohol | 5 ppm bzw. | 20 mg/m³ |

Für Hochtemperaturanwendungen sind es dabei die Furanderivate, die sich in den jüngsten Jahren als synthetische Bindemittel durchgesetzt haben.

Die US-A Nr. 3932244 beschreibt ein Verfahren zur Herstellung von zusammengesetzten Kohlenstoffmaterialien, die aus den Kohlenstoffauskleidungen von elektrolytischen Reduktionszellen zur Aluminiumherstellung wiedergewonnen werden.

Die angegebene Patentschrift betrifft dabei einen alkalischhärtenden Furanbinder, und zwar wegen der alkalischreagierenden Bestandteile aus dem elektrolytischen Reduktionszellen-Bad im wiedergewonnenen Kohlenstoffmaterial. Ferner wird ein Pech verwendet, das einen Erweichungspunkt von wenigstens 130°C aufweist und das in feingebrochener Form mit dem trockenen Material vermischt wird.

Als Beispiele für Furanbindemittel, die alkalischhärtend sind, werden Furfural und Phenol angegeben, sowie Furfural und ein Keton und ferner noch Furfurylalkohol und ein Aldehyd oder ein Amin.

Von diesen Mischungen sind es primär die mit Furfural und einem Keton (beispielsweise Cyclohexanon), die eine gewisse Fähigkeit für die Auflösung von Pech in einer Menge von etwa 50% aufweisen. Ferner sind es auch die Binder auf Furfuralbasis, die am reaktivsten sind.

Die empfohlene Bindemittelmenge ist mit 11 bis 14 Gew.-% angegeben, wobei das typische Mischungsverhältnis 40:60 Pech zu Furanbinder beträgt. Das bedeutet etwa 9 bis 11% flüssiges Bindemittel, wenn man annimmt, dass 50% des Pechs gelöst sind.

Für andere Materialien als die in der US-A Nr. 3932244 angegebene wiedergewonnene imprägnierte Kohle ist das keine ausreichende Bindemittelmenge, da die Hauptmenge des Materials im Bindemittel sehr viel poröser sein würde. Das würde dazu führen, dass die physikalischen und chemischen Eigenschaften der fertigen Produkte schlecht werden.

Es besteht somit weiterhin ein Bedürfnis nach einem Bindemittel für die Bindung von trockenen Materialien, die keine alkalischen Komponenten enthalten. Ferner wäre auch die Verwendung von Furanharzen ohne Furfuralanteile gegenüber der US-A Nr. 3932244 vorteilhaft, da Furfural eine Anzahl von unerwünschten Eigenschaften aufweist. Im Falle einer sauren Katalyse ist Furfural sehr schwierig zu steuern und Furfural ist sehr viel reaktiver als reine Furfurylalkoholderivate. Ausserdem hat Furfural einen niedrigeren Siedepunkt (162°C) als die Furfurylalkoholderivate (>172°C).

Furfurylalkohol und seine Derivate sind jedoch weniger in der Lage, ein Pech zu lösen als Furfural, so dass bei ihrer Verwendung kein Pech verwendet werden kann.

Wenn eine homogene Mischung aus einem Furfurylalkohol und einem Teer erreicht werden soll, was nötig it, damit die Mischung in die Poren eindringen kann und damit das Bindemittel Koks homogene Eigenschaften aufweist, müssen an den Teer und die Furfurylalkoholderivate bestimmte Anforderungen gestellt werden.

Furanharze sind verglichen mit Teer/Pech auch sehr teuer (sie weisen etwa den 5fachen Preis von Teer/Pech auf). Ferner erhält man aus Furanharzen üblicherweise eine spröde, glasartige Kohle beim Verkoken.

Die US-A Nr. 2345966 beschreibt die Verwendung eines reineren Furanharzes (einer Mischung von Furfurylalkohol und Furfural) für deren Verwendung allein oder zusammen mit verschiedenen Füllstoffen und einem latenten Katalysator. Was die Nachteile eines derartigen Furanharzes als Bindemittel betrifft, so kann weitgehend auf die obigen Ausführungen zur US-A Nr. 3932244 verweisen werden, mit der Ausnahme der kurzen Verarbeitungszeit.

Es ist den bekannten Bindemittelsystemen gemeinsam, dass die Binder während des Aushärtens zu Spannungen infolge der Ausdehnungs/Schrumpf-Prozesse im verbundenen System führen und diesen Spannungen auch selbst unterliegen.

Für Bindemittel, die unter Pyrolyse abbinden, führen die abgetriebenen flüchtigen Bestandteile zu einer Ausdehnung, während die anschliessende Dehydrierung und Neuorientierung der Macromoleküle zu einem Schrumpfen der Bindemittelphase und zu der Entstehung von Poren führt.

Wenn eine hohe Dichte, eine niedrige Durchlässigkeit und hohe Druck- und Zugspannungen wichtig sind, werden Kohlematerialien üblicherweise imprägniert, woran sich eine einmalige oder mehrmalige Wärmebehandlung unter Erhitzen auf 500 bis 750° C anschliesst.

Es ist Aufgabe der vorliegenden Erfindung, ein Bindemittel anzugeben, das die Anforderungen erfüllt, die an ein Bindemittel für seine Anwendungen bei hohen Temperaturen in inerten oder reduzierenden Atmosphären genügt, wobei es bei Raumtemperatur ausreichend flüssig sein muss, um bei dieser Temperatur bereits zu Formkörpern verarbeitet werden zu können, und wobei es andererseits nach einem Erhitzen bzw. bei seiner Verwendung bei hohen Temperaturen in inerten oder reduzierenden Atmosphären eine sehr niedrige Durchlässigkeit bei gleichzeitig hohen Druck- und Zugfestigkeiten aufweisen soll.

Diese Aufgabe wird durch ein Bindemittel gelöst, wie es in den Ansprüchen beschrieben ist.

Ein derartiges Bindemittel ist bei Raumtemperatur flüssig, wobei es sich grundsätzlich aus zwei Komponenten A und B sowie einem Katalysator zusammensetzt.

Die Komponente A ist dabei thermisch aushärtend und/oder katalytisch aushärtend, und zwar in einem Temperaturbereich von 10 bis 250° C, und nach dem Aushärten ist die erhaltenen feste Matrix mit der anderen Komponente B imprägniert, die ein Teer ist, der bei einer Temperatur, die wenigstens 200° C über der Temperatur liegt, die zum Härten der Komponente A erforderlich ist, in den festen Zustand überführt wird.

Die charakteristischen Eigenschaften des erfindungsgemässen Bindemittelsystems sind, dass das Aushärten bei niedrigen Temperaturen Verbindungen oder Elemente einer festen Form bei Temperaturen unter 250° C erzeugt, und dass der zurückbleibende flüssige Anteil des Bindemittels die erhaltene feste Matrix imprägniert, bevor dieser flüssige Anteil einer getrennten Pyrolyse unterliegt, die bei beträchtlich höherer Temperatur abläuft und die den Bestandteil B in den festen Zustand überführt.

Das erfindungsgemässe Bindemittelsystem ist besonders für die Herstellung von Klebern und Stampfpasten bei Raumtemperatur (10 bis 30° C) geeignet sowie für Anwendungen, bei denen hohe Druck- und/oder hohe Zugfestigkeiten im Hinblick auf die einwirkenden Spannungen oder inneren Spannungen wichtig sind, denen das Material, beispielsweise bei einem schnellen Aufheizen, ausgesetzt ist, und bei denen die kohlenstoffhaltige Bindemittelphase von Vorteil ist, damit ein chemisch inertes Produkt mit einer hohen elektrischen und/oder thermischen Leitfähigkeit zwischen entsprechenden Elementen oder in körnigen Materialien erhalten wird.

Bei dem erfindungsgemässen Bindemittelsystem besteht der Bestandteil A aus teilweise polymerisierten Furfurylharzen, die einen Maximalgehalt von 50 Gew.-%, vorzugsweise von 10 bis 30 Gew.-% Monomeren aufweisen und eine maximale Viskosität von 500 Pa · s, wobei der polymere Anteil des Furfurylalkohols durch Selbstkondensation erzeugt wird.

Die Komponente B ist ein Teer, der einen Erweichungspunkt unterhalb von 60° C (R & B) sowie einen Koksrückstand von vorzugsweise über 40 Gew.-% aufweist.

Die Bindemittelmischung besteht zu 92 bis 99 Gew.-% aus den Bestandteilen A zusammen mit dem Bestandteil B, wobei der Anteil der Komponente B an dieser Teilmischung zwischen 40 und 90 Gew.-% beträgt, während der Anteil des Katalysators 8 bis 1 Gew.-% der Gesamtmischung beträgt.

Verglichen mit üblichen Bindemitteln ist es ferner von Wichtigkeit, dass die bei einer Temperatur unterhalb von 150° C erreichte Formstabilität ausreicht, ein rasches Aufheizen der geformten Elemente in dem jeweiligen Verfahren zu erlauben, ohne dass vorher ein Backen erforderlich ist.

Infolge der geringeren Menge an Furanharz sowie der geringeren Monomermenge in diesem Harz, wird die Freisetzung von Furanverbindungen in der Form von Dampf stark vermindert.

Das Zumischen einer hocharomatischen Fraktion B in das synthetische Bindemittel A führt zu den folgenden Vorteilen:

1. Die Verdampfung des Furanharzes sowohl bei der Lagerung als auch während der Aushärtung wird vermindert.

Eine Mischung aus 25% Furanharz und 75% eines Teers mit einer Koksausbeute von 47% wies nach 48 h Aushärten (120° C) eine Koksausbeute von 50% auf.

Ohne die Zugabe des Teers betrug die Koksausbeute unter denselben Bedingungen 40,5%.

2. Da sich in der verfestigten Bindemittelphase weniger ausgesprochen glasartige Kohlenstoffanteile bilden, weist die Bindemittelphase eine gesteigerte Elastizität auf.

3. Ferner wird das Bindemittelsystem auch billiger.

Bei der Auswahl des Furanharzes ist es wichtig, den Grad der Pre-Polymerisation zu beachten. Je höher die Anzahl von OH-Gruppen ist, desto mehr Wasser ist während des Härtungs- bzw. Backprozesses anwesend, und desto poröser ist der Bindemittelkoks. Für den Zweck der vorliegenden Erfindung sind daher Furanharze mit einem Maximalgehalt von 10% Totalwasser bevorzugt, und zwar berechnet auf der Basis von OH und $H_2O$, sowie mit einem maximalen Furfurylalkoholgehalt von 50%. Wenn der Katalysator fein innerhalb der Masse verteilt ist, ist die Verarbeitungszeit der Masse lang, etwa 1 bis 4 Monate, in Abhängigkeit von der Menge und vom Type des Katalysators. Der Katalysator kann ferner auch im Voraus dem Teerbestandteil zugesetzt werden.

Der Binder kann durch eine Aushärtung erzeugt werden, die von einer Säure oder einer Base, die entweder zugesetzt werden oder sich während des Härtungsprozesses bilden, katalysiert werden, wobei der wasserfreie saure oder basische Katalysator bis zu 8 Gew.-% des Gesamtgewichts der Mischung aus Bestandteil A und Bestandteil B ausmachen kann.

Beispielsweise besteht ein bevorzugtes Verfahren zur Herstellung des Binders darin, den Bestandteil B, der aus einem Teer mit einer Koksausbeute vorzugsweise über 40 Gew.-% besteht, mit dem Bestandteil A zu mischen, der aus einem teilweise polymerisierten Furfurylalkohol mit einem maximalen Monomergehalt von 50 Gew.-%, vorzugsweise 10 bis 30 Gew.-% besteht und eine maximale Viskosität von 500 mPa·s aufweist, und bei dem der polymere Anteil des Furfurylalkohols durch Selbstkondensation erzeugt wurde.

Die Reaktion des Furfurylalkohols mit dem Katalysator ist bis zu einem gewissen Grade exotherm. Ein starker Temperaturanstieg während des Mischens vermindert jedoch die langfristige Stabilität der Masse.

Diese Stabilitätsverminderung kann auf zweierlei Weise vermindert werden:

1. Einmal dadruch, dass man die Menge der aktiven Reaktionspartner verglichen mit den anderen Bestandteilen vermindert. Das wird durch die Mischung mit dem Teer/Pech erreicht, auf die oben Bezug genommen wurde.

2. Ferner auch dadurch, dass man ausreichende Menge der festen Bestandteile, die von dem Bindemittel gebunden werden, zugibt, bevor man den Katalysator zusetzt, um sicherzustellen, dass die Menge an Bindemittel danach etwa 30 bis 50% der Menge der Gesamtmischung bildet. Die Reaktionswärme kann sich dann auf eine grössere Masse verteilen, mit dem Ergebnis, dass der erhaltene Temperaturanstieg unwesentlich wird.

Wenn eine lange Verarbeitungszeit erforderlich ist, beispielsweise eine Verarbeitungszeit von 2 bis 6 Monaten, ist ein latenter Katalysator gegenüber einer freien Säure bevorzugt. Ein latenter Katalysator kann, wenn erwünscht, direkt dem Bindemittel zugesetzt werden.

Nachfolgend wird die Erfindung anhand von Ausführungsbeispielen näher erläutert.

*Beispiel 1:*

Dieses Beispiel betrifft eine Masse für das Stampfen von Kathodenblöcken in einer Aluminium-Reduktionszelle. Die verwendeten Bestandteile sind:

Trockenmaterial: Elektrisch calcinierter Anthrazit mit einer maximalen Korngrösse von 3 mm, wobei 50% der Körner grösser als 0,2 mm und 30% der Körner kleiner als 0,1 mm sind.

Bindemittel: 17,5% der Gesamtmasse, wobei das Bindemittel aus 25% Furanharz mit einem Maximalgehalt von 40% Furfurylalkohol und einer Viskosität bei 20° C von etwa 100 mPa·s sowie 75% eines Teers besteht, der bei 20° C eine Viskosität von etwa 100 000 mPa·s aufweist und eine Koksausbeute von etwa 47% liefert.

Katalysator: 2,5% p-Toluolsulfonsäure — als 70%ige Lösung in Wasser.

Nachdem das Harz und der Teer miteinander vermischt waren, wurde etwa die Hälfte des Anthrazitanteils zugesetzt (vorzugsweise die gröbste Fraktion). Der Bindemittelgehalt der Gesamtmasse betrug dann etwa 35%, wobei ein derartiger Anteil ausreichte, eine pastenartige Masse zu erzeugen. Danach wurde der Katalysator zugesetzt und 5 min lang untergemischt. Anschliessend wurde der Rest des Anthrazits zugesetzt und ein abschliessendes Mischen wurde noch 15 min fortgeführt, wobei alle Arbeitsgänge bei Raumtemperatur durchgeführt wurden.

Durch Rütteln wurden 150 × 150-mm-Blöcke hergestellt, wobei das Rütteln einer Druckkraft von etwa 15 MPa entsprach.

Die erhaltenen Blöcke wiesen die folgenden Eigenschaften auf:

Dichte im grünen Zustand 1,53 g/cm³
Dichte im gebackenen Zustand 1,41 g/cm³ (das Backen wurde so durchgeführt, dass man 8 h lang auf eine Temperatur von 950° C erhitzte, wonach man den Block von allein abkühlen liess)
Koksausbeute 50%
Spezifischer elektrischer Widerstand 70 Ω· mm²/m
Druckfestigkeit 20 MPa
Y-Modul 5000 MPa
Durchlässigkeit 0,5 Centidarcy

*Beispiel 2:*

Dieses Beispiel betrifft einen Kleber bzw. eine Masse für Anwendungen, bei denen eine hohe elektrische Leitfähigkeit, eine niedrige Benetzung und eine niedrige Durchlässigkeit erforderlich sind, beispielsweise für das Verbinden von kathodenblöcken in einer Reduktionszelle zur elektrolytischen Aluminiumgewinnung an die Kathode.

Die Formmasse wies die folgenden Bestandteile auf:

Trockenmaterial: Kompakte Eisenteilchen mit einer maximalen Korngrösse von 0,5 mm, wobei 25% der Körner kleiner als 0,1 mm waren.

Bindemittel: 10 bis 20% der Gesamtmasse, Zusammensetzung wie in Beispiel 1.

Katalysator: 2 bis 4% p-Toluolsulfonsäure als 70%ige Lösung in Wasser.

Das erhaltene Produkt wies einen spezifischen elektrischen Widerstand von 2,5 Ω·mm²/m und eine Durchlässigkeit von weniger als 0,1 Centidarcy auf.

*Beispiel 3:*

Dieses Beispiel zeigt die Zusammensetzung und die Eigenschaften einer Formmasse für kohlenstoffgebundene Forsterit-Formmasse.

Bestandteile:

Trockenmaterial: Forsterit mit einer maximalen Korngrösse von 3,5 mm, wobei 45% eine Korngrösse von mehr als 0,8 mm und 25% eine Korngrösse von weniger als 0,1 mm aufweist.

Bindemittel: 4% der Gesamtmasse, Zusammensetzung wie in den Beispielen 1 und 2.

Katalysator: 6% p-Toluolsulfonsäure 70%ige Lösung in Wasser.

Nach einem 48stündigen Härtungsprozess bei 100° C betrug die Druckfestigkeit 20 MPa. Die Druckfestigkeit nach einem Erhitzen in einer reduzierenden Atmosphäre für 8 h auf 950° C und einem anschliessenden natürlichen Abkühlen betrug ebenfalls 20 MPa.

Das erfindungsgemässe Bindemittelsystem kann ausser für die angebenen Zwecke noch für eine Vielzahl anderer Zwecke verwendet werden:

Das Bindemittel kann mit einem Pulver aus Kohlenstoff, Carbiden, Siliciden, Boriden, Nitriden, Metallen, Metalloxiden, Silicaten oder anderen Materialien entweder einzeln oder in Mischung vermischt werden, um Formkörper, Stampfmassen oder Kleber herzustellen, die bei Raumtemperatur (20° C) ausgeformt werden können und die bei Temperaturen von weniger als 250° C gehärtet werden können.

Nachfolgend wird ein Beispiel für die Verwendung des Bindemittels als Kleber gegeben:

Ein Kleber, der aus 45% des obigen Bindemittels und 55% Anthrazit mit einer maximalen Korngrösse von 0,4 mm, wobei 50% kleiner als 0,1 mm sind, besteht, wird zum Verbinden der Auskleidungsteile von vorgebackenen Anthrazitprodukten für Abstichpfannen für die eisenlegierende Industrie verwendet.

Versuche mit weniger porösen Trockenmaterialien haben gezeigt, dass es möglich ist, den Bindemittelgehalt auf 15 bis 20% zu vermindern, wobei eine hohe Festigkeit, ein geringes Schrumpfen und eine niedrige Durchlässigkeit in der Verbindungsnaht erhalten wird.

Ein erfindungsgemässes Bindemittel kann ferner auch dazu verwendet werden, Formkörper zu imprägnieren oder zu tränken, um eine geringere Durchlässigkeit, eine höhere Beständigkeit gegenüber Chemikalien und/oder höhere mechanische Festigkeiten verglichen mit anderen Bindemitteln zu erreichen.

Das erfindungsgemässe Bindemittelsystem, das als Katalysator nur einen latenten Katalysator zugesetzt enthält, kann auch als ein Netzmittel mit einem besonders hohen Koksrest zum Heiss- und Kaltstampfen von Stampfmassen mit keramischem Material und/oder Anthrazit als Trockenmaterial verwendet werden.

Die in der vorliegenden Anmeldung angegebenen Werte für die Koksausbeute wurden nach der modifizierten Conradson-Methode ermittelt, die in ASTM D 2416-73 beschrieben ist.

Das Prinzip dieser Methode besteht darin, dass man aus einer Probe, die man für einen vorausbestimmten Zeitraum (30 min) auf eine vorausbestimmte Temperatur (900° C) in einer Spezialvorrichtung, die den Sauerstoffzutritt beschränkt, erhitzt, die flüchtigen Stoffe austreibt und damit die Probe pyrolysiert. Die erhaltene Ausbeute, ausgedrückt in Prozent, wird als Koksausbeute (Kokswert) bezeichnet.

**Patentansprüche**

1. Bindemittel für feuerfeste Materialien, das bei Raumtemperatur flüssig ist und aus einer Mischung von zwei Bestandteilen A und B mit einem Katalysator besteht, dadurch gekennzeichnet, dass der Bestandteil A ein katalytisch in einem Temperaturbereich von 10 bis 250° C aushärtbarer Bestandteil ist, der aus einem teilweise polymerisierten Furfurylharz auf der Basis von selbstkondensiertem Furfurylalkohol besteht, das einen maximalen Monomergehalt von 50 Gew.-% und eine maximale Viskosität von 500 mPa·s aufweist, und der Bestandteil B ein Teer ist, der bei einer Temperatur, die mindestens 200° C über der Temperatur liegt, die für die Aushärtung der Komponente A erforderlich ist, fest wird, wobei der Teer einen Erweichungspunkt aufweist, der niedriger als 60° C (R & B) ist, wobei das Bindemittel zu 92 bis 99 Gew.-% aus den Bestandteilen A und B besteht, wobei der Bestandteil B zwischen 40 und 90 Gew.-% dieser Mischung der Bestandteile A und B bildet, sowie aus 8 bis 1 Gew.-% des Katalysators, bezogen auf die Gesamtmischung.

2. Bindemittel nach Anspruch 1, dadurch gekennzeichnet, dass das teilweise polymerisierte Furfurylharz einen Monomergehalt von 10 bis 30 Gew.-% aufweist.

3. Bindemittel nach Anspruch 1, dadurch gekennzeichnet, dass der Teer eine Koksausbeute von mehr als 40 Gew.-% aufweist.

4. Verwendung des Bindemittels nach einem der Ansprüche 1 bis 3 zusammen mit Kohlenstoff-, Carbid-, Silicid-, Borid-, Nitrid-, Metalloxid- und/oder Silicatpulvern als Stampfmasse, Klebemasse und für die Herstellung von Formkörpern.

**Claims**

1. Binder for refractory materials, which said binder is liquid at room temperature and comprises a mixture of components A and B with a catalyst, characterised in that the component A is a component which can be catalytically hardened over a temperature range of 10 to 250° C and comprises partly polymerised furfural resin based on self-condensing furfural alcohol and having a maximum monomer content of 50% by weight and a maximum viscosity of 500 mPa·s and com-

ponent B is a tar, which becomes solid at a temperature which is at least 200° C above the temperature required for hardening of the component A, the tar having a softening point lower than 60° C (R & B), the binder comprising 92 to 99% by weight of components A and B, and the component B comprising between 40 and 90% by weight of this mixture of the components A and B and between 1 and 8% of the catalyst, referred to the total mixture.

2. Binder according to Claim 1, characterised in that the partially polymerised furfural resin has a monomer content of 10 to 30% by weight.

3. Binder according to Claim 1, characterised in that the tar has a coke yield of more than 40% by weight.

4. Use of the binder according to any of the Claims 1 to 3 together with carbon, carbide, silicide, boride, nitride, metal oxide and/or silicate powders as tamping compound, adhesive compound and for the production of mouldings.

**Revendications**

1. Liant pour matériaux réfractaires, liquide à température ambiante, et constitué d'un mélange de deux composants A et B et d'un catalyseur, caractérisé en ce que A est un constituant thermodurcissable par catalysation à des températures situées entre 10 et 250° C et composé d'une résine furfurylique en partie polymérisée sur la base d'alcool furfurylique autocondensé contenant au maximum 50% en poids de monomères et d'une viscosité maximale de 50 mPa·s et en ce que le composant B est un goudron qui se solidifie à une température supérieure de 200° C au moins à celle nécessaire au durcissement du composant A, le goudron ayant un point de ramollissement inférieur à 60° C (R & B), le liant étant composé, à 92 à 99% en poids, des composants A et B, le composant B représentant 40 à 90% en poids de ce mélange de A et B, ainsi que du catalyseur à 8 à 1% en poids par rapport à la totalité du mélange.

2. Liant selon la revendication 1, caractérisé en ce que la résine furfurylique en partie polymérisée contient 10 à 30% en poids de monomères.

3. Liant selon la revendication 1, caractérisé en ce que le goudron contient plus de 40% en poids de coke.

4. Utilisation du liant selon l'une des revendications 1 à 3, en relation avec des poudres de carbone, de carbure, de siliciure, de borure, de nitrure, d'oxyde métallique et/ou de silicate comme pisé réfractaire, comme masse collante et pour la fabrication de corps formés.